# EUROPEAN PATENT APPLICATION

(11) **EP 0 646 435 A1**
(43) Date of publication of application: **05.04.1995**
(21) Application number: 94115337.1
(22) Date of filing: 29.09.1994
(51) Int. Cl.: B24B 1/04, A61C 1/07

(54) **Rotary machining device, body thereof, and rotary tools therefor**

(30) Priority: 30.09.1993 JP 244478/93
(71) Applicant: TAGA ELECTRIC CO. LTD., Tokyo (JP)
(72) Inventor: Shoji, Mishiro, Miyamae, Kawasaki Kanagawa (JP); Seiji, Hamada, Yokohama Kanagawa (JP)
(74) Representative: Gesthuysen, von Rohr & Weidener

(57) **Abstract**

A rotary machining device comprises a rotary tool and a device body which removably holds the rotary tool and drives to rotate the rotary tool. The rotary tool is formed by forming a large-diameter shank which is insensitive to vibration, through a small-diameter vibration damping section, at the rear end of an ultrasonic resonance body. The ultrasonic resonance body is formed by providing a magnetostrictive member on the outer peripheral surface of a rotary core having a machining edge on the forward end. The described rotary tool is removably held at the shank portion by the rotary driving section provided in the device body and is rotated; at this time a high-frequency magnetic force is applied to the magnetostrictive member from the ultrasonic driving section provided in the device body, thereby driving the rotary tool with ultrasonic vibration superposed on constant-speed rotation. Therefore, since the rotary tool itself produces the ultrasonic vibration, simplification of device construction, improvements in producibility of the device, and miniaturization and lightening of the device are realizable. Furthermore, because the rotary tool can be designed to be easily releasable, it is possible to improve the flexibility of machining operation by preparing varieties of rotary tools for different types of machining edges.

## Description

### BACKGROUND OF THE INVENTION

### 1. Field of the Invention

The present invention relates to tooth machining tools such as dental burrs and bits, cutting tools or grinding tools for precision machining and, more particularly, to ultrasonic vibration superimposing-type rotary machining devices for use in precision machining.

### 2. Description of the Related Art

Generally, in the field of machining, high-speed cutting operation using a cutting tool as a rotary tool having a cutting edge which is a machining edge, and high-speed grinding operation using a mounted grinding stone as a rotary tool having a machining edge are carried out.

In the aforementioned cutting and grinding operations, generally the higher the cutting or grinding speed, the higher the cutting quality of the cutting edge becomes; therefore, high-speed rotary units using a tool mounted on a spindle of a milling machine or cutting center and those which are adapted to operate in interlock with an engine, a rotor, or an air turbine, which has a tool operating in interlock with a small, handy electric motor are used in large quantities. Particularly the handy units are very frequently used also in odontotherapy.

In these small-size rotary machining devices, the tool is designed to be driven by an electric motor; however, the cutting or grinding speed is low because of a small tool diameter and a low maximum speed of rotation of the electric motor which drives the tool. In order to solve such a problem, there has been worked a rotary machining device for rotating the tool at a very high speed by means of the air turbine. Some of these rotary machining devices rotating at a speed of 500,000 to 600,000 rpm have been realized. In the case of the rotary machining device of the described constitution, since the tool rotates at a high speed with a low cutting resistance, the device is utilized for tooth cutting as a dental equipment. It, however, is demanded to further reduce the cutting resistance to alleviate a patient's pain and discomfort.

In the meantime, in the field of tooth cutting in the odontotherapy, there has been disclosed a rotary machining device in Japanese Patent Publication No. Sho 36-19650, in which rotating dental burr or bit is superposed with ultrasonic vibration of longitudinal or torsional mode for the purpose of reducing the cutting resistance by the vibratory cutting effect in relation to the tendency of increasing the speed of tool rotation. Noticing the effect disclosed in this gazette, there also has been suggested, in for example Japanese Patent Publication No. Sho 60-27298 (U.S. Pat. No. 4,496,321), a rotary machining device which has realized painless cutting, with a decreased cutting resistance, by cutting a tooth by the use of a burr or bit which is driven by an ordinary engine or air turbine, while vibrating the tooth by an ultrasonic vibrator.

A similar cutting effect is obtainable by using a sintered diamond burr which is driven to rotate while being added with ultrasonic vibration whereby the cutting resistance can be decreased remarkably. Therefore such a rotary machining device is in practical use for drilling and grinding a hard, fragile material such as glass and ceramics.

Problems inherent to the described prior arts will next be explained. As described above, the superposition of ultrasonic vibration on a rotary tool which is rotating can reduce the cutting or grinding resistance of the rotary tool without excessively increasing the speed of rotation thereof, thereby improving the cutting quality of the tool and thus going a long way towards the improvement of machining speed and machining accuracy.

However, when such a rotary machining device is to be actually used, an ultrasonic transducer must be incorporated integrally in the rotary tool to be rotated, in order to apply ultrasonic vibration to the rotary tool. In this case, this ultrasonic transducer rotates together with the rotary tool and therefore a feeder system including a feeder and a slip ring for supplying the electric power to the ultrasonic transducer is provided on the rotary tool side. It, therefore, will become necessary to rigidly support the member of a resonantly vibrating vibration system such as the ultrasonic transducer including the rotary tool without giving vibration damage to the system. The rotary machining device described above, therefore, is actually complicated in construction, making it difficult to improve productivity and to build a miniature, light-weight device.

In such a rotary machining device, the rotary tool must be securely fastened by bolting or by silver soldering to the vibration system such as the ultrasonic transducer and horn, and therefore, the interchangeability of the rotary tool will lower, resulting in deteriorated flexibility of machining operation. Furthermore, in the described rotary machining device, when the ultrasonic transducer and the feed system is incorporated in the rotary tool, the rotation symmetry of the rotary tool will be deteriorated, presenting a major cause of run-out of the machining edge. Thus a lowered machining accuracy results, making it difficult to perform precision machining.

### SUMMARY OF THE INVENTION

It is an object of the present invention to provide a rotary machining device of simple construction, a body thereof, and rotary tools therefor.

It is another object of the present invention to provide a miniature, light-weight rotary machining device, a body thereof, and rotary tools therefor.

A further object of the present invention resides in the provision of a high-productivity rotary machining device, a body thereof, and rotary tools therefor.

Another object of the present invention resides in the provision of a rotary machining device, a body thereof, and rotary tools therefor, which are suitable for odontotherapy.

Another object of the present invention resides in the provision of a rotary machining device, a body thereof, and rotary tools therefor, which are excellent in interchangeability of the rotary tools.

Further another object of the present invention resides in the provision of a rotary machining device, a body thereof, and rotary tools therefor, which have high machining accuracy.

Further another object of the present invention resides in the provision of a rotary machining device, a body thereof, and rotary tools therefor, which are suitable for use in machining in a narrow place.

The present invention is accomplished by forming a large-diameter shank insensitive to vibration on the end of an ultrasonic resonance body through a small-diameter vibration damping portion. The ultrasonic resonance body includes a rotary tool formed by providing a magnetostrictive member on the outer peripheral surface of a rotary core material having a machining edge at the tip and the body of the device having an ultrasonic driving unit which applies a high-frequency magnetic force to a magnetostrictive member and a rotary driving unit which drives the rotary tool shank. As the rotary tool shank is driven by the rotary driving unit and the magnetostrictive member of the rotary tool is applied with the high-frequency magnetic force by the ultrasonic driving unit, the rotary tool is driven with the ultrasonic vibration superimposed on constant-speed rotation. Therefore since the rotary tool itself produces ultrasonic vibration, it is possible to realize the simplification of construction of the device, and the enhancement of productivity, miniaturization and lightening of the device. Besides, since the rotary tools can be designed for easy mounting and removal, it will become possible to improve the flexibility of machining operations by preparing varieties of rotary tools having machining edges of different shapes.

### BRIEF DESCRIPTION OF THE DRAWINGS

Further objects and advantages of the present invention can be more fully understood from the following detailed description taken in conjunction with the accompanying drawings in which:
Fig. 1 is a longitudinal sectional side view showing the internal construction of a rotary machining device as one example of the present invention;
Fig. 2 (A) is a longitudinal sectional side view showing the internal construction of a rotary tool for explaining a relation between the rotary tool and the vibration mode;
Fig. 2 (B) is a characteristic view showing the vibration mode of the rotary tool for explaining a relation between the rotary tool and the vibration mode;
Fig. 3 is a perspective view showing the outside appearance of the rotary tool;
Fig. 4 is a longitudinal sectional side view showing the internal construction of the rotary machining device as a fifth modification of the present invention;
Fig. 5 is a aide view showing a magnetostrictive member of the rotary tool as a sixth modification of the present invention;
Fig. 6 (A) is a perspective view showing the outside appearance of the rotary tool for explaining a relation between the rotary tool and the vibration mode as a seventh modification of the present invention;
Fig. 6 (B) is a characteristic view showing the vibration mode of the rotary tool for explaining a relation between the rotary tool and vibration mode as the seventh modification of the present invention;
Fig. 7 (A) is a side view showing the outside appearance of the rotary tool for explaining a relation between the rotary tool and the vibration mode as an eighth modification of the present invention;
Fig. 7 (B) is a characteristic view showing the vibration mode of the rotary tool for explaining a relation between the rotary tool and the vibration mode as the eighth modification of the present invention;
Fig. 8 is a longitudinal sectional side view showing the internal construction of the rotary machining device as a tenth modification of the present invention;
Fig. 9 (A) is a longitudinal sectional side view showing the internal construction of the rotary machining device for explaining a relation between the rotary tool and the vibration mode as an eleventh modification of the present invention;
Fig. 9 (B) is a characteristic view showing the vibration mode of the rotary tool for explaining a relation between the rotary tool and the vibration mode as the eleventh modification of the present invention; and
Fig. 9 (C) is a side view showing the tip portion of another rotary tool as the eleventh modification of the present invention.

### DETAILED DESCRIPTION OF THE PREFERRED EMBODIMENT

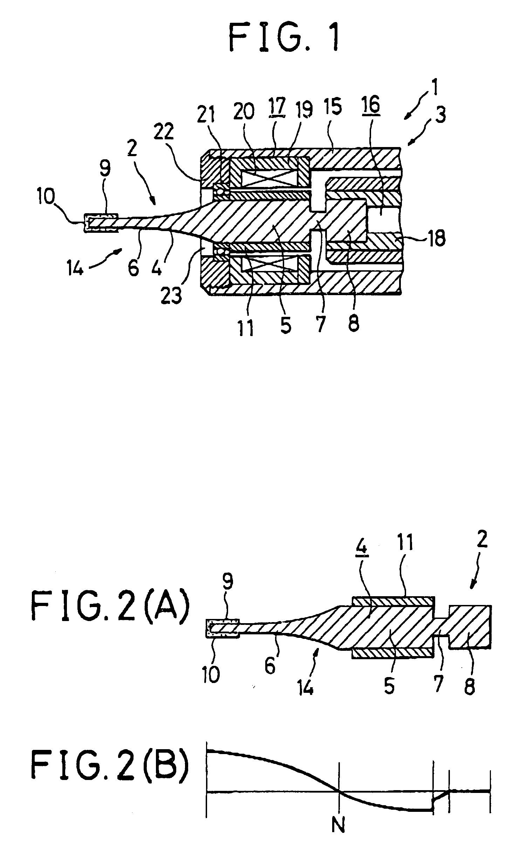

Hereinafter one embodiment of a rotary machining device according to the present invention will be described with reference to Figs. 1 to 3. First, the rotary machining device 1 is of such a construction that a rotary tool 2 is removably mounted to a device body 3 as shown in Fig. 1.

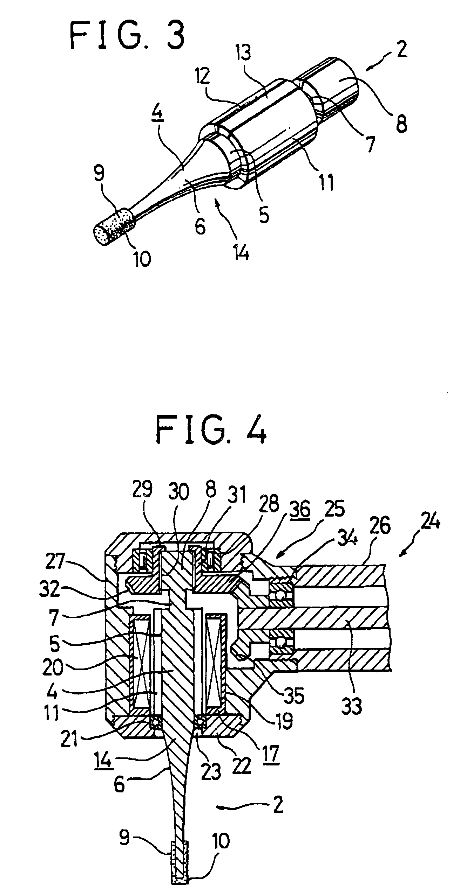

In the rotary tool 2 of the rotary machining device 1, as shown in Fig. 2 (A) and Fig. 3, a rotary core 4 is produced of a non-magnetic material such as SUS303; the rotary core 4 is formed integrally with a sharp taper portion 6 ahead of a large-diameter, cylindrical body portion 5, and has a large-diameter cylindrical neutral tab 8 which is a shank insensitive to vibration, protruding as a unit at the end of the body portion 5 through a buffer portion 7 which is a small-diameter vibration damping section.

Furthermore, the rotary tool 2 is integrally fitted with a small-diameter, cylindrical grinding stone 10 whose external surface functions as a cutting edge 9, on the forward end of the taper portion 6 of the rotary core 4. On the outer peripheral surface of the body portion 5 of the rotary core 4 is integrally fitted a magnetostrictive member 11 produced of cylindrical magnetostrictive ferrite. In this rotary tool 2, as shown in Fig. 3, the magnetostrictive member 11 is partially cut away in parallel with the axial direction, thereby forming one gap 12, in which a permanent magnet 13 having magnetic poles in the circumferential direction of the magnetostrictive member 11 is integrally fitted. To the rotary core 4 the magnetostrictive member 11 and the permanent magnet 13 are attached by for example bonding at high temperatures with an organic adhesive or by attaching with metal solder. Particularly the use of the metal solder improves heat resistance.

In the rotary tool 2, the ultrasonic resonance body 14 for exciting the torsional vibration on the cutting edge 9 of a grinding stone 10 the taper portion 6 is formed of the magnetostrictive member 11, the body portion 5 of the rotary core 4 fitted with the magnetostrictive member 11, the taper portion 6 for increasing the ultrasonic vibration of the body portion 5, and the grinding stone 10 fitted on the forward end of the taper portion 6.

The body 3 of the rotary machining device 1, as shown in Fig. 1, has a rotary driving section 16 for rotating the neutral tab 8 of the rotary tool 2 and an ultrasonic driving section 17 for applying the high-frequency magnetic force to the magnetostrictive member 11 of the rotary tool 2.

The rotary driving section 16 of the device body 3 has a driving power source such as an electric motor or an air turbine (not illustrated) which is disposed in the casing 15, and a collet chuck 18 for removably holding the neutral tab 8 of the rotary tool 2 is directly coupled with the rotating shaft (not illustrated) of this driving power source. The ultrasonic driving section 17 of the device body 3 is of such a construction that a magnetic coil 20 is installed on the inner peripheral surface of the casing 15 through a ferrite magnetic yoke 19 in a position facing the magnetostrictive member 11 on the rotary tool 2 with the neutral tab 8 held by the collet chuck 18, and a driving circuit (not illustrated) for producing the high-frequency current is connected to the magnetic coil 20.

In the device body 3 of the rotary machining device 1, a circular ball bearing 21 for properly supporting the front part of the body portion 5 of the rotary tool 2 is mounted in the center bore 23 of a cap 22 which is removably screwed in the front part of the casing 15, for the purpose of rotatably supporting the rotary tool 2 which is removable.

The grinding stone 10 securely mounted on the rotary core 4 of the rotary tool 2 of the rotary machining device 1 may be formed of for example sintered diamond or an electrodeposited diamond, far which fine grains of borazon, GC (Green Carborundum), and WA (White Alundum) are usable.

In the rotary machining device 1 of the above constitution, the rotary tool 2 is removably mounted to the device body 3 with its shank rotatably supported, and the ultrasonic resonance body 14 of the rotary tool 2 which is driven to rotate by the rotary driving section 16 is driven to make torsional vibration by the ultrasonic driving section 17.

To explain more particularly, in the device body 3 of the rotary machining device 1, the driving circuit of the ultrasonic driving section 17 has been preset to output the high-frequency current at a torsional resonance frequency of the ultrasonic resonance body 14 of the rotary tool 2; the magnetic coil 20 thus supplied with the high-frequency current generates a high-frequency magnetic force. The magnetostrictive member 11 of the rotary tool 2 in which a bias magnetic force is being produced in a circumferential direction by the permanent magnet 13 is subjected to torsional vibration by the Wiedemann effect because of the axial flow, through the magnetostrictive member 11, of the high-frequency magnetic force produced by the magnetic coil 20 of the ultrasonic driving section 17. The amplitude of the torsional vibration thus created in the magnetostrictive member 11 of the rotary tool 2 is amplified at the taper portion 6 of the rotary core 4, and therefore the grinding stone 10 mounted on the forward end of the taper portion 6 produces ultrasonic vibration with a large amplitude in the circumferential direction.

That is, when the rotary tool 2 has produced the torsional resonance vibration distributed at "λ/2" resonance along the shank, the portion ranging from the rear edge portion of the magnetostrictive member 11 to the front face of the grinding stone 10 resonates at "λ/2", and the grinding stone 10 produces the circumferential ultrasonic vibration at an enlarged amplitude at the taper portion 6 of the rotary core 4 serving as a vibration enlarging horn. Here, "λ" denotes the wavelength of vibration distributed in the rotary tool 2.

In the rotary machining device 1, the grinding stone 10 of the rotary tool 2, producing circumferential ultrasonic vibration as described above, is driven simultaneously to rotate by the rotary driving section 16 of the device body 3, with ultrasonic vibration superimposed on the constant-speed rotation of the grinding stone 10. In the rotary machining device 1, therefore, the superposition of ultrasonic vibration can decrease the machining resistance of the grinding stone 10 without excessively increasing the rotational speed of the rotary tool 2, thereby improving the cutting quality of the grinding stone 10 and accordingly enabling to improve machining speed and accuracy and to prolong the life of the grinding stone 10.

In the rotary machining device 1, as described above, the rotary tool 2 which produces the ultrasonic vibration is held and rotated by the rotary driving section 16 of the device body 3. However, since the torsional vibration of the ultrasonic resonance body 14 will not pass to the neutral tab 8 of the rotary tool 2 which is held by the collet chuck 18 at the rotary driving section 16, the torsional vibration of the rotary tool 2 will not leak out to give vibration damage to the rotary driving section 16.

That is, the amplitude of the torsional vibration shows its distribution linearly decreasing as it goes from the outer periphery towards the axial center. However, because the buffer portion 7 connecting the large-diameter neutral tab 8 to the body portion 5 is of a much smaller diameter than the neutral tab 8 and the body portion 5, the amplitude of the torsional vibration of the ultrasonic resonance body 14, after entering the buffer portion 7, decreases in proportion to diameter, and consequently the torsional vibration will hardly pass to the neutral tab 8 which, being large in diameter, has a great inertia relative to the torsional vibration.

In the rotary tool 2 as described above, the more the inertia moment of the neutral tab 8 increases, the greater the buffer effect of the buffer portion 7 grows; accordingly, the diameter of the buffer portion 7 can be increased by increasing the overall length and diameter of the neutral tab 8. Actually, the inertia of the rotary tool 2 including the collet chuck 18 which securely holds the neutral tab 8 increases substantially largely, and therefore it is allowed that the diameter of the buffer portion 7 is about a half of the diameter of the body portion 5. The insensitivity to vibration of the neutral tab 8 given by the buffer action of the buffer portion 7 and the inertia of the neutral tab 8 itself improves better with an increase in the resonance frequency of the rotary tool 2.

Furthermore, the rotary machining device 1 is of such a construction that the rotary tool 2 is not connected to the rotary driving section 16 of the device body 3 at the vibration node position of the ultrasonic resonance body 14; and therefore the rotary driving section 16 of the device body 3 will not be adversely affected by the ultrasonic vibration of the rotary tool 2, and besides will be little affected even if the resonance frequency of the ultrasonic resonance body 14 is changed by for example replacing the rotary tool 2 with one of different shape.

In this rotary machining device 1 of the above-mentioned constitution, the rotary tool 2 which produces ultrasonic vibration is supported with high rigidity without undergoing vibration damage, and further the run-out of the grinding stone 10 can be prevented by rotatably supporting the rotary tool 2 with the ball bearing 21 of the device body 3, thereby improving the machining accuracy.

The rotary tool 2 composed of the ultrasonic resonance body 14 produces ultrasonic vibration by itself, and therefore there is no necessity, unlike prior art devices, of securing the rotary tool 2 by bolts or other to the ultrasonic transducer or horn (not illustrated) mounted on the device body 3, and also of supplying the electric power from a feeder system (not illustrated) to the rotary tool 2 which produces the ultrasonic vibration by the high-frequency magnetic force. The rotary tool 2, therefore, is very simple in construction, allowing easy enhancement of producibility, miniaturization and lightening, and improvement in rotation symmetry. Further the cutting accuracy can be improved by preventing the run-out of the grinding stone 10.

In addition, the rotary tool 2 which is thus simple in construction and removable from the device body, particularly when attached with an electrodeposited diamond stone, is usable as a throwaway tool. Since various rotary tools 2 usable with different types of machining edges can be prepared, it is possible to decrease the running cost of the rotary machining device 1 and, at the same time, to impart higher flexibility of machining operation. That is, the rotary tool 2 fitted with the grinding stone 10 and rotating while producing the ultrasonic vibration has been exemplified; however, it should be noted that the present invention is not limited to the embodiment explained above and varieties of rotary tools, such as drills, taps, reamers, and end mills, are usable as occasion arises. When the rotary tool 2 is to be mounted to the device body 3, the rear half portion of the rotary tool 2 is inserted into the casing 15 with the cap 22 of the device body 3 removed. Then, with the neutral tab 8 held by the collet chuck 18, the cap 22 is mounted to the casing 15.

In the rotary machining device 1 the ultrasonic vibration to be superposed on the constant-speed rotation of the grinding stone 10 of the rotary tool 2 is torsional vibration, which can provide a large magnification by a single-stage amplitude magnifying horn; therefore no concatenation of multiple-stage amplitude magnifying horns is needed. That is, the ultrasonic resonance body 14 of the rotary tool 2 is able to insure substantial vibration amplitude in spite of short length in its overall. This rotary machining device 1, being easy to miniaturize and lighten and having good machining performance, is best suited for use in tooth cutting.

### First Modification

A modification of the ball bearing 21 will be explained. In working the present invention, the leakage of the ultrasonic vibration likely to be caused by the positional error in relation to the vibration node of the rotary tool 2 can be prevented by using an oilless sleeve (not illustrated) for the ball bearing 21. Also, it is feasible to improve the degree of freedom of the bearing position of the rotary tool 2 and to prevent the leakage of the ultrasonic vibration by using a non-contact bearing (not illustrated) such as an air bearing or a magnetic bearing in place of the ball bearing 21. Also when the length of the rotary tool 2 is short and the diameter of the buffer portion 7 can be increased relatively large, it becomes unnecessary to support the front vibration node with the ball bearing 21 and so forth.

### Second Modification

A modification of the magnetostrictive member 11 will be explained. In the rotary tool 2 of the rotary machining device 1 of the present embodiment, the use of the magnetostrictive ferrite as the magnetostrictive member 11 has been exemplified. As the magnetostrictive member 11, nickel plating, adhesive nickel film, nickel plate laminates, and amorphous laminates are usable.

To explain more concretely, the rotary tool 2 can be formed by laminating, on the rotary core 4, a 0.1 mm-thick pure nickel plate (not illustrated) on which, after annealing, an oxide layer is formed on the surface, together with an adhesive as the magnetostrictive member 11, and then by attaching the permanent magnet 13, after hot setting, to the gap 12 area formed on the surface. In this case, the rotary tool 2 can produce a powerful ultrasonic vibration despite of a low electromechanical conversion efficiency. In the case of the rotary tool 2 using a magnetostrictive amorphous alloy sheet as the magnetostrictive member 11 produced by rapidly cooling a molten metal, powerful ultrasonic vibration can be created at a better electromechanical conversion efficiency.

Furthermore, when further miniaturisation of the rotary tool 2 is important for use in tooth cutting described later, it is suitable to form the magnetostrictive member 11 by nickel plating. In this case, the magnetostrictive member 11 is provided by forming a 0.1 to 0.5 mm thick film of nickel plating on the surface of the rotary core 4 which has been masked at the area where the magnetostrictive member 11 is not needed, and the permanent magnet 13 is attached to the gap 12 formed by masking the magnetostrictive member 11 by nickel plating. In the rotary tool 2, it is also feasible, for example, to form the magnetostrictive member 11 by nickel plating on the rotary core 4 fitted in advance with the permanent magnet 13.

Generally, because, in the case of the electroplating of nickel, there remains a stress in an electrodeposited film, the residual stress in the magnetostrictive member 11 composed of nickel plating gives adverse effect to the magnetostrictive characteristics. Actually, however, since proper electroplating chemicals and conditions are selected, it is possible to form a magnetostrictive member 11 having good vibration characteristics on the rotary tool 2.

Furthermore, since the magnetostrictive member 11 is formed by electroplating nickel on a jig (not illustrated) of the same shape as the body portion 5 of the rotary core 4 and then detached from the jig, the residual stress that occurred at the time of electroplating is relieved when the magnetostrictive member 11 is detached from the jig, thereby imparting a better magnetostrictive effect to the rotary core 4 without being affected by the residual stress.

### Third Modification

A modification of the permanent magnet 13 will be explained. In the present embodiment of the rotary tool 2 of the rotary machining device 1, the provision of one permanent magnet 13 at one gap 12 formed in the magnetostrictive member 11 has been exemplified. It is to be noted, however, that the permanent magnet 13 may be fitted in each of a plurality of gaps 12 formed in positions having rotation symmetry in relation to the magnetostrictive member 11 in order to thereby improve the rotation symmetry of the rotary tool 2.

### Fourth Modification

A modification of a bearing structure for supporting the forward end portion of the rotary tool 2 by the ball bearing 21 will be explained. Furthermore, in the rotary machining device 1, the inner peripheral surface of the ball bearing 21 of the device body 3 contacts the outer peripheral surface of the rotary core 4, thus supporting the rotary tool 2 rotatably in the device body 3. It should be noted that it is also feasible, for example, to fit (not illustrated) the inner peripheral surface of the ball bearing 21 of the device body 3 in contact with the outer peripheral surface of the magnetostrictive member 11 extended to the vibration node of the ultrasonic resonance body 14 of the rotary 2, thereby making it unnecessary to remove and install the cap 22 at the time of replacement of the rotary tool 2 and accordingly facilitating the replacement of the rotary tool 2.

### Fifth Modification

The fifth modification is an example of a rotary machining device 24 adapted for use in odontotherapy. That is, this modification embodies the rotary machining device 24 formed as small in size as possible for tooth cutting by utilizing the ultrasonic vibration as the torsional resonance vibration to be applied to the rotary tool 2. It should be noted that the same members used in varieties of modifications exemplified below as those appearing in the described rotary machining device 1 are designated by the same reference numerals and will not be described in detail.

First, the rotary machining device 24 is also of such a construction that the rotary tool 2 is removably mounted to a device body 25. In the device body 25, an annular holding member 29 is rotatably supported by a roller bearing 28 in the upper part of a cylindrical casing 27 mounted at the forward end of a slender cylindrical handle 26. Here, on the inner peripheral surface of the holding member 29 is formed a stepped hole 30 in which the neutral tab 8 of the rotary tool 2 is slidably but not rotatably fitted; the stepped hole 30 being lined with nylon resin 31; and the holding member 29 is formed integrally with a bevel gear 32 on the outer peripheral surface.

In the device body 25 of the rotary machining device 25, a rotating shaft 33 of a driving power source (not illustrated) such as an electric motor or an air turbine is disposed inside the handle 26 and rotatably supported by a ball bearing 34. A bevel gear 35 is mounted on the forward end of the rotating shaft 33 which is inserted through the ball bearing 34. This bevel gear 35 is engaged with the bevel gear 32, to thereby form a rotary driving device 36 of the device body 35 to drive the rotary tool 2.

In the rotary machining device 24 of the described constitution, the rotary tool 2 is also removably mounted in the device body 25, and the ultrasonic resonance body 14 of the rotary tool 2 which is driven by the rotary driving section 36 is driven to make torsional vibration by means of the ultrasonic driving section 17.

The rotary machining device 24 is composed of the ultrasonic resonance body 14, and the rotary tool 2 which produces ultrasonic resonance vibration by itself can be formed small and extremely simple in construction. The rotating shaft 33 of the driving power source for driving the rotary tool 2 carries the bevel gear 35 which is in mesh with the bevel gear 32 and is disposed outside of the casing 27. The casing 27 which is inserted into a patient's mouth (not illustrated) becomes very small so that it can be manipulated quite efficiently.

More concretely, the rotary tool 2 of the rotary machining device 24 is made by forming the rotary core 4 measuring, for example, 23 mm in overall length, 2.2mm in the outside diameter of the body portion 5, 2.0 mm in the overall length and 1.2 mm in the outside diameter of the buffer portion 7, and 4.0 mm in the overall length and 3.0 mm in outside diameter of the neutral tab 8, by forming, on this rotary core 4, a 0.8 mm-thick layer of ferrite magnetostrictive member 11, by installing the permanent magnet 13 having magnetic poles in a circumferential direction, in one unit, in the gap 12 provided by cutting away the magnetostrictive member 11 in parallel with the axial direction, and by forming a grinding stone 10 of electrodeposited diamond. The machining edge 9 of the rotary tool 2 is formed in cutting edges of various shapes suitable to machining operations; and stainless steel and tungsten carbide are utilized as their materials.

In the rotary machining device 24, the resonance frequency of torsional vibration of the ultrasonic resonance body 14 of the rotary tool 2 is set for a high-frequency current to be outputted from the driving circuit of the ultrasonic driving section 17 of the device body 25; the rotary tool 2 having for example the above-described dimensions will resonate at the resonance frequency of around 116 kHz. The vibration amplitude of the grinding stone 10 of the rotary tool 2 producing torsional vibration by the use of such a high-frequency current of resonance frequency is set by a high-frequency power outputted by the driving circuit of the ultrasonic driving section 17 of the device body 25. For example, provided that the high-frequency power is 136 mW, the vibration amplitude will become 4.0 µmP-P at the forward end of the grinding stone 10, thus producing a power of 1.6 W as a-maximum load.

The rotary tool 2 operating with the torsional vibration superimposed on the constant-speed rotation is usable for cutting teeth with the grinding stone 10 with good cutting quality at low machining resistance without excessively increasing the speed of rotation. Besides, teeth can be cured without giving either discomfort or pain to the patient by setting the resonance frequency of torsional vibration of the rotary tool 2 over the sensible frequency area where the patient will not feel pain.

### Sixth Modification

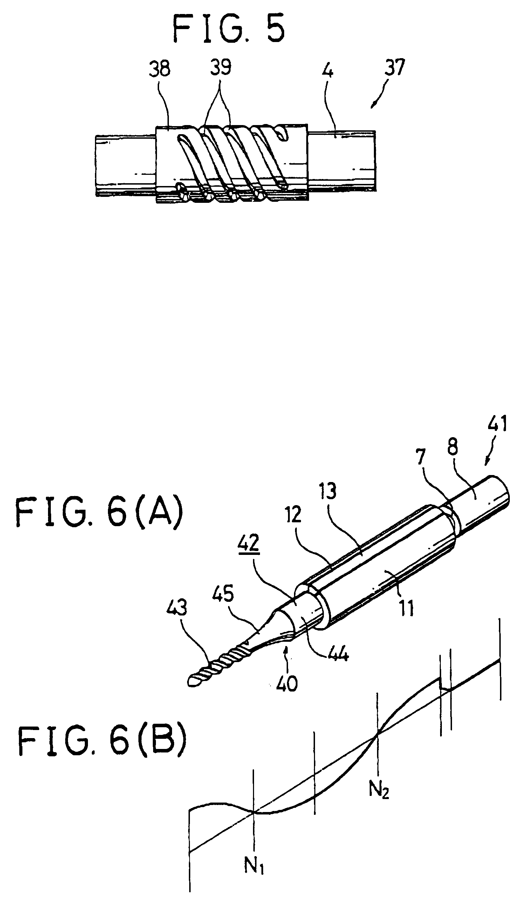

A modification pertaining to a means for producing torsional vibration at the ultrasonic resonance body 14 will hereinafter be explained. It has been exemplified that, in the rotary tool 2 of the described rotary machining device 1, the torsional vibration is produced by the Wiedemann effect with the high-frequency magnet force of the ultrasonic driving section 17 flowing in the axial direction through into the magnetostrictive member 11 where the permanent magnet 13 produces a bias magnetic force. It, however, should be noted that the present invention is not limited only to the described embodiment. For example, as shown in Fig. 5, a spiral gap 39 is formed, inclined relative to the axial direction, in the magnetostrictive member 38 of the rotary tool 37, and at the same time the direct current is superimposed on the high-frequency current to be applied, thus enabling the superposition of the bias magnetic force on the high-frequency magnetic force produced by the ultrasonic driving section 17 of the device body 3.

In the rotary machining device thus constituted, the magnetostrictive member 38 makes expansion and contraction in the direction of formation of the gap 39 by utilizing the high-frequency magnetic force of the ultrasonic driving section 17 on which the bias magnetic force is superposed, causing the rotary tool 37 to torsionally vibrate at the resonance frequency.

In the described rotary machining device, there is no necessity of installing the permanent magnet 13 to the magnetostrictive member 38 of the rotary tool 37, and therefore it is possible to decrease the number of components to thereby do much towards improving producibility. Furthermore in this rotary machining device, it is necessary to form the spiral gap 39 in the magnetostrictive member 38 of the rotary tool 37; this gap 39 can easily be formed by masking the gap area by printing with a non-conductive paint at the time of manufacturing the magnetostrictive member 39 of nickel plating.

### Seventh Modification

A modification pertaining to a vibration wavelength distributed in the rotary tool 2 will be explained. In the above-described rotary tool 2 was exemplified the ultrasonic resonance body 14 which produces ultrasonic resonance vibration being distributed at "λ/2" resonance along the axis. It, however, is to be noticed that the present invention is not limited only to the above-described embodiment and a rotary tool 41 in which an ultrasonic resonance body 40 produces the "λ" ultrasonic vibration as exemplified in Fig. 6 is feasible.

Here, the rotary tool 41 is a drill with a machining edge 43 formed in a spiral shape on the forward end portion of a rotary core 42 of non-magnetic cemented carbide; the magnetostrictive member 11 is formed for the length of "λ/2" on a body portion 44 of the rotary core 42; and for the remaining length of "λ/2", a tapered portion 45 for amplitude amplification and the machining edge 43 is formed integrally with the body portion 44.

In the rotary machining device of the described constitution, since the magnetostrictive member 11 is formed "λ/2" long with a vibration node "N" at center, the rotary tool 41 has a very good electromechanical conversion efficiency, producing high-intensity ultrasonic vibration at the machining edge 43.

The rotary tool 41, therefore, is best suited for use in precision drilling operation; for example, through holes or the like thus drilled in a multilayer printed circuit board (not illustrated) have an improved degree of surface roughness with decreased burrs and smears and, further, the durability of the machining edges 43 of the rotary tool 41 is improved.

Furthermore, in this type of rotary tool 41, when the ultrasonic resonance vibration of the ultrasonic resonance body 40 is set to the torsional resonance vibration, the cutting edge at the tip of the machining edge 43 has as great a vibration amplitude as it approaches a corner. The tool, therefore, can cut the inner peripheral surface of the drilled hole with a substantial vibratory cutting effect owing to the increased vibration amplitude of the machining edge 43 at the corner, thus forming a high-precision hole.

### Eighth Modification

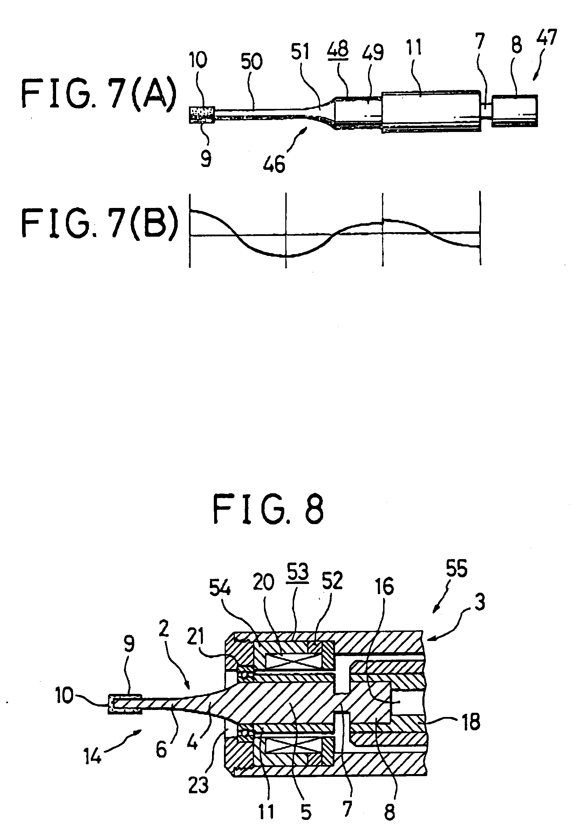

Hereinafter a modification pertaining to the vibration wavelength distributed in the rotary tool 2 will be explained. As shown in Fig. 7, a rotary tool 47 in which an ultrasonic resonance body 46 produces "1.5λ" ultrasonic resonance vibration is also feasible. The rotary tool 47 is also fitted with the magnetostrictive member 11 for the length of "λ/2" on a body portion 49 of a rotary core 48; for the remaining "λ" length an equal-diameter portion 50 fitted with the grinding stone on the forward end and a taper portion 51 for amplitude magnification are formed integrally with the body portion 49.

In the rotary tool 47 of such a constitution, the magnetostrictive member 11 is formed for the length of "λ/2" with the vibration node at center, and therefore a good electromechanical conversion efficiency is obtainable and at the same time the inner peripheral surface of a drilled hole can be ground accurately with the machining edge 9 on the outer peripheral surface of the grinding stone 10. Because this rotary tool 47 has the grinding stone 10 on the forward end of the long, equal-diameter portion 50, the grinding stone 10 can easily be inserted deep into a small-diameter hole and finish-grind the inner surface of the hole.

### Ninth Modification

Next, a modification pertaining to vibration produced in the ultrasonic resonance body 14 will be explained. In the rotary machining device 1 described above, the ultrasonic vibration of the ultrasonic resonance body 14 set to the torsional vibration has been described. It, however, should be noted that the present invention is not limited to the described modification and for example the ultrasonic vibration is usable as axial vibration or compound vibration.

To explain the rotary machining device 1 more concretely, when the direct current superposed on the high-frequency current of resonance frequency of axial vibration of the ultrasonic resonance body 14 is applied to the magnetic coil 20, the magnetostrictive member 11 of the rotary tool 2 is axially magnetized at a high frequency together with the bias magnetic force, longitudinally extending and contracting. The rotary tool 2, therefore, produces great ultrasonic resonance vibration as axial vibration at the axial resonance frequency of the ultrasonic resonance body 14. That is, the rotary machining device 1 can selectively produce both the torsional resonance vibration and the axial resonance vibration in the rotary tool 2 by selectively switching the frequency of the high-frequency current to be superposed on the direct current and applied to the magnetic coil 20, to the resonance frequency of torsional vibration or axial vibration of the ultrasonic resonance body 14.

Even when the rotary tool 2 of the above-described rotary machining device 1 is operated with ultrasonic vibration at axial resonance vibration, the axial resonance vibration of the rotary tool 2 is hardly transmitted to the rotary driving section 16 of the device body 3 by the neutral tab 8 having a great inertia to this vibration and the buffer portion 7. Therefore, it is possible to prevent giving vibration damage likely to be caused by the leakage of the axial resonance vibration of the rotary tool 2 to the rotary driving section 16.

The rotary machining device 1 described above is of such a construction that a circumferential bias magnetic force is produced by the permanent magnet 13 which is installed partly in the magnetostrictive member 11 for the purpose of producing the torsional vibration properly at the ultrasonic resonance body 14. This, however, will not impede the excitation of the axial resonance vibration of the ultrasonic resonance body 14. It is apparent that where only such axial resonance vibration is needed, the permanent magnet 13 which produces the circumferential bias magnetic force can be dispensed with from the magnetostrictive member 11.

### Tenth Modification

Next a modification pertaining to the bias magnetic force will be explained. As shown in Fig. 8, also practicable is a rotary machining device 55 which is provided, as a part of the magnetic yoke 54 of the ultrasonic driving section 53, with an annular permanent magnet 52 which produces an axial bias magnetic force. In the rotary machining device 55 of the above-described constitution, it is possible to produce the bias magnetic force without superposing the direct current on the high-frequency current to be applied to the magnetic coil 20 as described above; and therefore a simple-construction driving circuit can produce the ultrasonic vibration of axial resonance vibration in the ultrasonic resonance body 14.

### Eleventh Modification

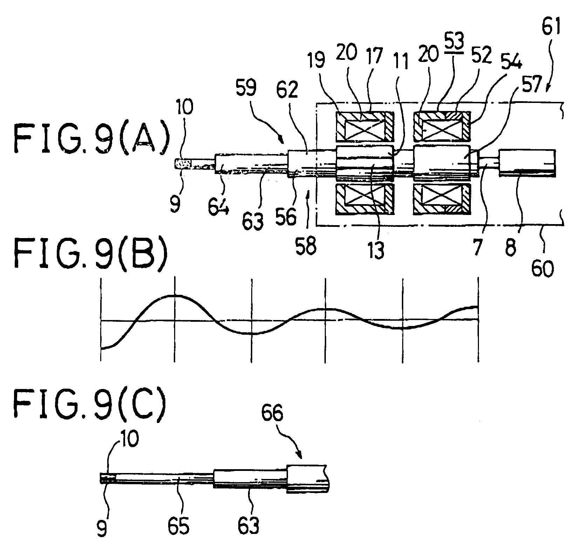

Next, a modification, which is different from the ninth modification, pertaining to vibration produced in the ultrasonic resonance body 14 will be explained. Also as shown in Fig. 9 (A), the magnetostrictive member 11 formed integrally with the permanent magnet 13 and an annular magnetostrictive member 57 not formed integrally are successively mounted on a long and large rotary core 56, thereby constituting an ultrasonic resonance body 58. A rotary tool 59 including this ultrasonic resonance body 58 is mounted to a device body 60 which is fitted successively with an ultrasonic driving section 17 for torsional vibration and an ultrasonic driving section 53 for axial vibration. A rotary machining device 61 having this type of device body 60 stated above is also practicable. More particularly, since the rotary machining device 61 is of such a construction that, as shown in Fig. 9 (B), the ultrasonic resonance body 58 of the rotary tool 59 makes 2λ resonance distribution of torsional vibration and axial vibration, the magnetostrictive members 11 and 57 are successively mounted on the body portion 62 of the rotary core 56 with the "λ/2" node of this resonance distribution set at center, and, at the same time, step horns 63 and 64 for amplitude magnification are successively formed.

In the rotary machining device 61 thus constituted, the rotary tool 59, when rotated by the device body 60 through the neutral tab 8, can selectively produce the torsional vibration or the axial vibration in accordance with the selective driving of the ultrasonic driving section 17, 53. Furthermore, the compound vibration including torsional vibration and axial vibration is produced at the rotary tool 59 by driving the ultrasonic driving section 17, 53 simultaneously.

At this time, in the rotary machining device 61, torsional vibration and axial vibration produced at the rotary tool 59, as shown in Fig. 9 (B), make the same amplitude distribution but are different only in the direction of vibration. When torsional vibration and axial vibration of the same amplitude distribution are simultaneously generated, the amplitude of compound ultrasonic vibration is magnified by the step horns 63 and 64, to thereby transmit the vibration to the grinding stone 10.

In the case of the resonance distribution in the rotary tool 59, the axial vibration frequency is set for example at 200 kHz, the torsional vibration frequency becomes around 120 kHz since the axial vibration frequency is 1.7 times the torsional vibration frequency.

In the rotary machining device 61, the rotary tool 59 is ultrasonically vibrated with the compound vibration including torsional vibration and axial vibration as described above, thereby improving the machining speed and accuracy and prolonging the life of the grinding stone 10.

For example, when the rotary machining device 61 is used to drill holes in a rigid, brittle material such as ceramics, glass, and so forth, fine crushing of the rigid, brittle material is accomplished with axial vibration produced in the axial direction of the grinding stone 10 and at the same time the circumferential torsional vibration of the grinding stone 10 gives a vibratory cutting effect to the grains of the rotating grinding stone. Therefore, there can be obtained a compound vibration effect which is not obtainable from either the axial vibration or the torsional vibration alone, thus insuring extremely high machining speed and accuracy.

Furthermore, as shown in Fig. 9(C), it is feasible to carry out grinding the inside surface of a deep, small-diameter hole with a compound vibration of torsional vibration and axial vibration, using the rotary tool 66 formed by extending the step horn 66 by "λ/2", and inserting the grinding stone 10 which makes ultrasonic compound vibration of torsional vibration and axial vibration, deeply into a small-diameter hole.

## Claims

1. A rotary machining device, comprising: a rotary tool which is formed by unitarily projecting a large-diameter shank insensitive to vibration, through a small-diameter vibration damping section at the end of an ultransonic resonance body; said ultrasonic resonance body having a rotary core formed of a non-magnetic material, a machining edge provided on the forward end portion of said rotary core, and a magnetostrictive member provided on the outer peripheral surface of said rotary core; and a device body having an ultrasonic driving section for applying a magnetic force to said magnetostrictive member and a rotary driving section removably supporting and rotating said shank, and, preferably, wherein said ultrasonic resonance body produces torsional vibration or wherein said ultrasonic resonance body produces axial vibration or wherein said ultrasonic resonance body produces compound vibration.

2. A rotary machining device according to claim 1, wherein said magnetostrictive member is provided with a gap formed in parallel with the axial direction of said rotary tool and a permanent magnet which produces a bias magnetic force in the circumferential direction of said magnetostrictive member is mounted in said gap portion of said rotary core for the purpose of producing torsional vibration at said ultrasonic resonance body.

3. A rotary machining device according to claim 2, wherein said permanent magnet is attached to said rotary core by high-temperature adhesion using an organic adhesive or wherein said permanent magnet is attached to said rotary core by metal soldering or wherein said gap is formed in a plurality of positions on said rotary tool where rotational symmetry is formed, and said permanent magnet is attached in said gap.

4. A rotary machining device according to claim 1, wherein a spiral gap is formed, inclined relative to the axial direction of said rotary tool, in said magnetostrictive member for the purpose of producing torsional vibration in said ultrasonic resonance body, and said ultrasonic driving section superposes a bias magnetic force on a high-frequency magnetic force and applies a magnetic force to said magnetostrictive member, and, preferably, wherein said magnetostrictive member is formed by nickel plating applied to said rotary core.

5. A rotary machining device according to claim 1, wherein said ultrasonic driving section superposes a bias magnetic force on a high-frequency magnetic force to apply the magnetic force to said magnetostrictive member, for the purpose of driving said ultrasonic resonance body to produce axial vibration or wherein said ultrasonic driving section is provided with a permanent magnet which produces a bias magnetic force in the axial direction of said ultrasonic resonance body, for the purpose of driving said ultrasonic resonance body to produce axial vibration.

6. A rotary machining device according to claim 1, wherein said compound vibration is produced by a combination of torsional vibration and axial vibration.

7. A rotary machining device according to any preceding claim, wherein said magnetostrictive member is produced of magnetic ferrite, and attached to said rotary core with an organic adhesive by high-temperature adhesion or wherein said magnetostrictive member is produced of magnetic ferrite, and attached to said rotary core with metal solder or wherein said magnetostrictive member is formed by nickel plating applied to said rotary core.

8. A rotary machining device according to any preceding claim, wherein said magnetostrictive member is formed half as long as the wavelength of vibration being distributed in said rotary tool, and, preferably, wherein the forward end of said rotary tool not including said magnetostrictive member of said rotary tool is formed as long as the wavelength of vibration being distributed in said rotary tool.

9. A rotary machining device according to any preceding claim, wherein said rotary tool has a taper portion formed at the forward end and/or further comprising a bearing in said device body for supporting the vibration node of said rotary tool.

10. A rotary machining device according to any preceding claim, wherein said device body includes a casing for housing a holding member which removably holds said shank of said rotary tool, a handle for housing a rotating shaft which extends squarely from said casing and is connected to a driving power source, and a bevel gear for transmitting the rotation of said rotating shaft to said holding member; said rotary driving section being formed of said driving section, said rotating shaft, said bevel gear, and said holding member.

11. A machining tool of a rotary machining device, comprising: an ultrasonic resonance body having a rotary core formed of a non-magnetic material, a machining edge provided on the forward end of said rotary core, and a magnetostrictive member provided on the outer peripheral surface of said rotary core; a small-diameter vibration damping section formed on the rear end side of said magnetostrictive member of said ultrasonic resonance body; and a large-diameter shank which is insensitive to vibration, and is formed through said vibration damping section at the rear end of said ultrasonic resonance body.

12. A device body of a rotary machining device, comprising: an ultrasonic driving section for applying a magnetic force to a magnetostrictive member of a rotary tool; and a rotary driving section for removably holding, and for rotating, a shank of said rotary tool.
